# FASCICULE DE BREVET EUROPEEN

(11) **EP 3 811 578 B1**
(45) Date de publication et mention de la délivrance du brevet: **17.09.2025**
(21) Numéro de dépôt: 19790585.4
(22) Date de dépôt: 07.06.2019
(51) Int. Cl.: H04L 45/302, H04L 45/02

(54) **PROCÉDÉ DE DÉCOUVERTE DE FONCTIONS INTERMÉDIAIRES ET DE SÉLECTION D'UN CHEMIN ENTRE DEUX ÉQUIPEMENTS DE COMMUNICATION**
VERFAHREN ZUR ENTDECKUNG VON ZWISCHENFUNKTIONEN UND ZUR AUSWAHL EINES PFADS ZWISCHEN ZWEI KOMMUNIKATIONSVORRICHTUNGEN
METHOD OF DISCOVERING INTERMEDIATE FUNCTIONS AND SELECTING A PATH BETWEEN TWO COMMUNICATION DEVICES

(30) Priorité: 22.06.2018 FR 1855615
(43) Date de publication de la demande: 28.04.2021
(73) Titulaire: Orange, 92130 Issy-les-Moulineaux (FR)
(72) Inventeur: STEPHAN, Emile, 92326 CHÂTILLON CEDEX (FR); FIEAU, Frédéric, 92326 CHÂTILLON CEDEX (FR); FROMENTOUX, Gaël, 92326 CHÂTILLON CEDEX (FR)
(74) Mandataire: Vidon Brevets & Stratégie
(86) Numéro de dépôt international: PCT/FR2019/051386
(87) Numéro de publication internationale: WO 2019/243706

(56) Documents cités:
- US-A1- 2015 326 473

## Description

### Domaine de l'invention

Le domaine de l'invention est celui de la transmission de données. Plus précisément, l'invention concerne une méthode permettant la découverte, la sélection et l'activation de fonctions, dites de transmission, hébergées dans des équipements intermédiaires d'un chemin établi entre deux équipements de communication.

### 1. Art antérieur et ses inconvénients

Le chiffrement de bout en bout (en anglais, *End-to-end encryption* ou *E2EE*) est une technique utilisée dans les systèmes de communication où seuls les équipements de communication ayant établi une connexion entre eux peuvent accéder au contenu de certaines données transmises au moyen de la connexion, les données utiles à l'acheminement pouvant être non chiffrées.

Les systèmes de chiffrement de bout en bout sont conçus pour résister à toute tentative de surveillance ou de modification des données, car aucun tiers ne peut déchiffrer, et donc accéder aux données ainsi communiquées s'il ne possède pas les clés de sécurité utilisées pour le chiffrement et le déchiffrement.

Ainsi, le contenu des messages transmis à l'équipement de communication destinataire est chiffré localement par l'équipement de communication émetteur avant même que les messages soient envoyés au travers de la connexion, établie sur un chemin de communication comprenant des équipements intermédiaires. Ces équipements intermédiaires, de type « *middlebox* » par exemple, ne font que relayer les messages chiffrés, à partir des données d'acheminement non chiffrées, et c'est l'équipement de communication destinataire qui déchiffre le message. La transaction est ainsi sécurisée indépendamment de l'équipement intermédiaire qui, lui, pourrait être compromis. Le chiffrement de bout-en-bout est devenu une pratique qui se généralise de plus en plus sur l'Internet.

A cela vient s'ajouter l'évolution des protocoles constituant la pile de protocoles de services Web, et plus particulièrement l'évolution de la couche transport du modèle OSI (Open Systems Interconection) de cette pile protocolaire. La conjonction de ces deux phénomènes contribue à réduire la coopération entre les équipements de communication situés aux extrémités de la connexion et les équipements intermédiaires ou « *middlebox* » notamment en restreignant l'activation de fonctions hébergées dans les équipements intermédiaires. Par exemple, le protocole de la couche transport QUIC (*Quick UDP Internet Connections*)*,* en cours de normalisation à l'IETF (*Internet Engineering Task Force*), et de plus en plus utilisé dans les réseaux de communication, ne permet plus l'insertion de données par les équipements intermédiaires tel que l'enrichissement des en-têtes des paquets utilisés pour la transmission des données.

Le projet européen de recherche NEAT (*A New, Evolutive API and Transport-Layer Architecture for the Internet*) a pour ambition de développer un nouveau système de transport pour l'Internet doté d'une APl (Interface de Programmation d'Applications) facile d'utilisation pour les développeurs de logiciels. Ce système à pour but d'offrir aux utilisateurs d'applications connectées une plus grande fiabilité ainsi qu'une meilleure qualité d'expérience.

Les téléphones intelligents ou « *smartphones* »*,* les ordinateurs portables et les tablettes peuvent exécuter une grande variété de programmes informatiques. Chaque application a ses propres exigences quant à la manière de transporter ses données au travers de l'Internet et quant aux fonctions « transport » à activer pour l'acheminement et le traitement des données de l'application. Les besoins de communication d'une application de capteurs sont par exemple différents de ceux d'une application de lecture de contenus vidéo en continu ou « *streaming* »*.* Cette diversité de besoins confronte les développeurs d'applications à des choix complexes, à la fois en termes de type de réseaux supportés et de configuration des paramètres et options des protocoles de transport.

Le document US2015/326473A1 décrit un dispositif permettant de sélectionner une route comprenant des nœuds intermédiaires dans lequel une fonction requise est située et peut être appliquée au trafic en transit.

Ainsi, l'API développée dans le cadre du projet NEAT permet, en fonction des demandes d'ouvertures de connexions des applications, de sélectionner et d'assembler le ou les protocoles de transport nécessaires au fonctionnement de l'application.

Cependant ce procédé est local : cette pile protocolaire n'est assemblée que par les équipements de communication constituant les extrémités des connexions utilisées pour le transport des données relatives aux applications.

Par conséquent, les requêtes de ces applications ne sont pas transmises aux équipements intermédiaires qui hébergent les fonctions souhaitées.

Il existe donc un besoin d'une technique ne présentant pas de tels inconvénients.

### 2. Exposé de l'invention

L'invention répond à ce besoin en proposant un procédé de découverte d'au moins une fonction relative à la transmission de données, dite fonction de transmission, destinée à être exécutée par au moins un nœud intermédiaire d'au moins un chemin établi entre un premier équipement de communication et un deuxième équipement de communication, ledit procédé étant exécuté par ledit nœud intermédiaire et comprenant :
- une étape de transmission, à destination dudit deuxième équipement de communication, d'au moins un paramètre représentatif de ladite fonction de transmission, la transmission dudit paramètre représentatif de ladite fonction de transmission étant déclenchée par l'interception d'un message de signalisation dudit chemin émis par le premier équipement de communication à destination du deuxième équipement de communication.

L'invention permet de rétablir la coopération entre des équipements de communication, constituant les extrémités d'une connexion, avec des nœuds intermédiaires, ou « *middlebox* »*,* hébergeant des fonctions de transmission.

En effet, l'invention propose qu'un nœud intermédiaire appartenant à un chemin établi entre deux équipements de communication fournisse des informations relatives aux fonctions de transmission, telle qu'une fonction d'horodatage des données ou de cryptage, etc., qu'il est apte à exécuter, dans un champ d'un message transmis à l'un des équipements constituant une extrémité du chemin. Pour ce faire, le nœud intermédiaire n'accède pas au contenu du message d'établissement. En effet, l'interception du message de signalisation déclenche la transmission par le nœud intermédiaire d'informations relative à ces fonctions. Ainsi, la communication entre les deux équipements de communication reste sécurisée même si le nœud intermédiaire est compromis.

L'invention s'applique également dans le domaine des machines virtuelles. Dans ce cas de figure, les nœuds intermédiaires peuvent être mis en œuvre selon des instances virtuelles proposant des fonctions de transmission.

Selon une première caractéristique de l'invention, le procédé comprend une étape de modification dudit message de signalisation en ajoutant ledit au moins un paramètre représentatif de ladite fonction de transmission dans au moins un champ dudit message de signalisation.

Le nœud intermédiaire se contente d'ajouter des informations dans un champ de celui-ci ou de remplacer des données de bourrage contenues dans un champ du message ou d'émettre un nouveau message comprenant ces informations.

Dans le cas d'une implémentation reposant sur l'utilisation du protocole QUIC, la découverte des fonctions disponibles se fait, par exemple, en étendant la sémantique du champ du message contenant les données de bourrage des messages PATH_CHALLENGE qui correspond au message d'établissement. Ce champ du message ne transporte aucune donnée utile, sa longueur constitue un test de la taille des messages supportée.

Selon une caractéristique de l'invention, le procédé comprend une étape de transmission d'un message de service comprenant ledit au moins un paramètre représentatif de ladite fonction de transmission dans au moins un champ dudit message de service.

Selon une caractéristique de l'invention, ledit message modifié comprend une liste de paramètres représentatifs de combinaisons de fonctions de transmission destinées à être exécutées par un même nœud intermédiaire.

Le deuxième équipement de communication reçoit une liste de chacune des fonctions de transmission pouvant être exécutées par les nœuds intermédiaires appartenant au chemin établi entre les deux équipements de communication.

L'invention concerne également un procédé de sélection d'au moins un chemin établi entre un premier équipement de communication et un deuxième équipement de communication, ledit chemin comprenant au moins un nœud intermédiaire adapté pour exécuter, au niveau de la couche de transmission, au moins une fonction relative à la transmission de données, dite fonction de transmission, ledit procédé étant exécuté par le deuxième équipement de communication et comprenant :
- une étape de sélection d'un chemin au travers duquel lesdites données sont destinées à être transmises en fonction d'au moins un premier paramètre représentatif de ladite fonction de transmission et d'au moins un deuxième paramètre représentatif du type de données destinées à être transmises entre le premier et le deuxième équipement de communication, ladite étape de sélection étant déclenchée par la réception d'au moins un message comprenant au moins l'un desdits premier ou deuxième paramètres,
- une étape d'émission d'un message d'acquittement à destination du premier équipement de communication comprenant dans au moins un de ses champs au moins un paramètre représentatif du chemin sélectionné.

Le deuxième équipement de communication détermine, sur la base des informations contenues dans le message d'établissement, le chemin qui doit être utilisé en vue de la transmission des données depuis le premier équipement de communication.

Dans le cas d'une implémentation reposant sur l'utilisation du protocole QUIC, la transmission des fonctions disponibles vers le premier équipement de communication se fait, par exemple, en étendant la sémantique des messages PATH_RESPONSE qui correspond au message d'acquittement.

Selon une autre caractéristique de l'invention, ledit message d'établissement comprenant au moins un paramètre indiquant que lesdites données sont destinées à être transmises de manière bidirectionnelle entre le premier et le deuxième équipement de communication, le procédé comprend en outre les étapes suivantes exécutées par ledit nœud intermédiaire :
- Interception dudit message d'acquittement,
- Activation de ladite au moins une fonction de transmission destinée à être exécutée par ledit nœud intermédiaire,
- Transmission dudit message d'acquittement à destination du premier équipement de communication.

Lorsque la transmission de données entre les deux équipements de communication et au travers du chemin sélectionné est bidirectionnelle, les nœuds intermédiaires interceptent le message d'acquittement et activent la ou les fonctions de transmission identifiées dans le message d'acquittement qu'ils hébergent. Ainsi les données transmises par le deuxième équipement de communication bénéficient des traitements appropriés.

Selon une autre caractéristique de l'invention, le message d'acquittement comprend en outre un paramètre de mise à jour d'un fichier de routage du premier équipement de communication, ledit fichier étant destiné à être mis à jour avec ledit au moins un paramètre représentatif du chemin sélectionné.

Dans cette implémentation, le message d'acquittement comprend un message, par exemple, de type JSON PATCH. Un tel message JSON PATCH indique qu'un fichier doit être mis à jour est comprend les informations nécessaires à la mise à jour de ce fichier. Ici, le fichier à mettre à jour est par exemple un fichier de routage du premier équipement de communication du type proxy.PAC.

Un fichier de type proxy.PAC est un fichier de Configuration Automatique de Proxy. Un tel fichier définit, par exemple, la façon selon laquelle un navigateur web ou d'autres fonctionnalités équivalentes, regroupées sous le nom de « User Agents », se connecte à Internet : il leur permet d'utiliser automatiquement le proxy approprié à l'URL (*Uniform Resource Locator,* littéralement « localisateur uniforme de ressource ») demandée.

Selon une autre caractéristique de l'invention, ledit au moins un paramètre représentatif du chemin sélectionné comprend une liste des fonctions de transmissions destinées à être exécutées par ledit au moins un nœud intermédiaire.

Cette implémentation est de mise en œuvre simple.

Selon une autre caractéristique de l'invention, ledit au moins un paramètre représentatif du chemin sélectionné comprend une liste de fonctions de transmission à exécuter ainsi qu'un identifiant d'au moins un nœud intermédiaire adapté pour exécuter chacune des fonctions de transmission listées.

Dans une telle implémentation, le deuxième équipement de communication a déjà déterminé les fonctions de transmissions souhaitées pour la transmission de données avec le premier équipement de communication.

Selon une autre caractéristique de l'invention, ledit au moins un paramètre représentatif du chemin sélectionné comprend au moins une empreinte numérique identifiant au moins une fonction de transmission destinée à être exécutée et au moins un nœud intermédiaire adapté pour exécuter ladite au moins une fonction de transmission.

Dans ce mode de réalisation de l'invention, le deuxième équipement de communication identifie les fonctions de transmission ou les combinaisons de fonctions de transmission au moyen d'une empreinte numérique ou « *hash* »*.*

Un autre objet de l'invention concerne un nœud intermédiaire d'un chemin établi entre un premier équipement de communication et un deuxième équipement de communication, ledit nœud intermédiaire étant adapté pour exécuter, au niveau de la couche de transmission, une fonction relative à la transmission des données, dite fonction de transmission, et comprenant :
- des moyens d'interception d'un message de signalisation dudit chemin émis par le premier équipement de communication à destination du deuxième équipement de communication,
- des moyens de transmission, à destination dudit deuxième équipement de communication, d'au moins un paramètre représentatif de ladite fonction de transmission.

Enfin, l'invention concerne un équipement de communication adapté pour sélectionner au moins un chemin établi entre ledit équipement de communication et un autre équipement de communication, ledit chemin comprenant au moins un nœud intermédiaire adapté pour exécuter, au niveau de la couche de transmission, au moins une fonction relative à la transmission de données, dite fonction de transmission, ledit équipement de communication comprenant :
- des moyens de réception d'au moins un message comprenant au moins un paramètre représentatif de ladite fonction de transmission et/ou au moins un paramètre représentatif du type de données destinées à être transmises entre ledit équipement de communication et l'autre équipement de communication,
- des moyens de sélection d'un chemin au travers duquel lesdites données sont destinées à être transmises en fonction dudit au moins un paramètre représentatif de ladite fonction de transmission et dudit au moins un paramètre représentatif du type de données destinées à être transmises,
- des moyens d'émission d'un message d'acquittement à destination de l'autre équipement de communication comprenant dans au moins un de ses champs au moins un paramètre représentatif du chemin sélectionné.

L'invention concerne également un produit programme d'ordinateur comprenant des instructions de code de programme pour la mise en œuvre des procédés tel que décrits précédemment, lorsqu'ils sont exécutés par un processeur.

L'invention vise également un support d'enregistrement lisible par un ordinateur sur lequel sont enregistrés des programmes d'ordinateur comprenant des instructions de code de programme pour l'exécution des étapes des procédés selon l'invention tels que décrits ci-dessus.

Un tel support d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que les programmes d'ordinateur qu'il contient sont exécutables à distance. Les programmes selon l'invention peuvent être en particulier téléchargés sur un réseau par exemple le réseau Internet.

Alternativement, le support d'enregistrement peut être un circuit intégré dans lequel le programme est incorporé, le circuit étant adapté pour exécuter ou pour être utilisé dans l'exécution des procédés de détection et de sélection.

### 3. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- La **figure 1A** représente un premier système dans lequel le procédé selon l'invention est mise en œuvre;
- La **figure 1B** représente un deuxième système dans lequel le procédé selon l'invention est mis en œuvre;
- La **figure 2** représente les étapes du procédé selon l'invention,
- La **figure 3** représente de manière schématique un équipement de communication;
- La **figure 4** représente de manière schématique un nœud intermédiaire.

### 4. Description détaillée de modes de réalisation de l'invention

Le principe général de l'invention repose sur la découverte de fonctions de transmission élémentaires hébergées dans différents nœuds intermédiaires d'un réseau de communication au travers desquels un chemin est établi entre un premier équipement de communication et un deuxième équipement de communication.

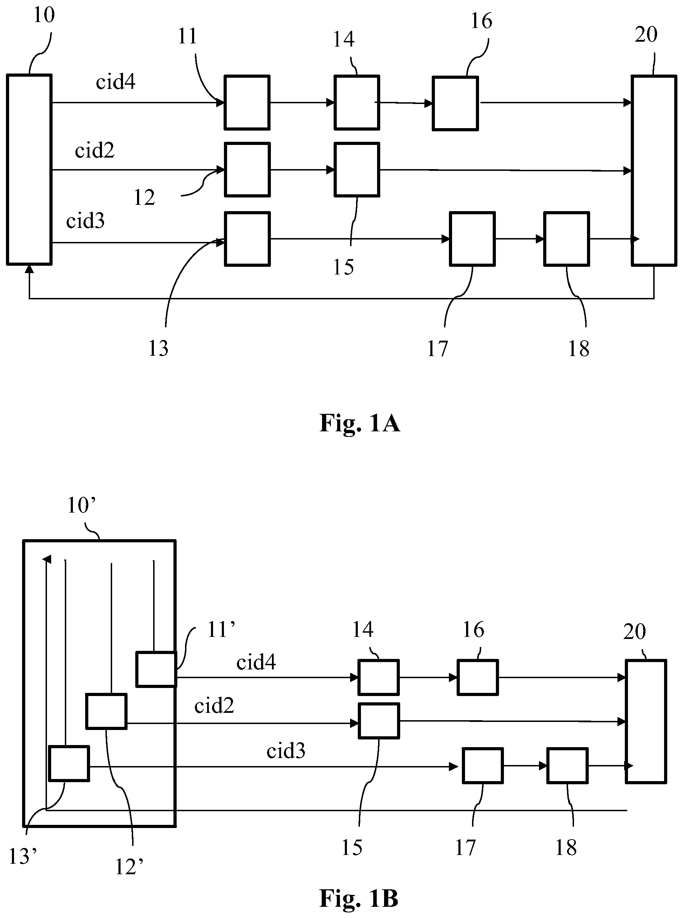

La **figure 1A** représente un premier système 1 dans lequel le procédé selon l'invention est mise en œuvre.

Le système 1 comprend un premier équipement de communication 10, un tel équipement de communication 10 est par exemple une passerelle domestique telle qu'une LiveBox^{®}, un téléphone portable de type « *smartphone* »*,* un décodeur numérique ou « *Set Top Box* », etc.

Le système 1 comprend une pluralité de nœuds intermédiaires 11-18 situés dans un ou plusieurs réseaux de communication. De tels nœuds intermédiaires 11-18 sont par exemples des éléments d'un réseau mobile (MEC (*Mobile Edge Computing*), C-RANs (*Cloud Radio Access Networks*))*,* des routeurs, des passerelles dotées de fonctions de transport ou de fonctions applicatives, ou des proxys. Les nœuds intermédiaires 11-18 hébergent une ou plusieurs fonctions de transmission.

Enfin, le système 1 comprend un deuxième équipement de communication 20 tel qu'un serveur par exemple.

Plusieurs chemins de communication cid2, cid3, cid4, au travers desquelles des données sont destinées à être transmises, sont établis ou en cours d'établissement entre le premier équipement de communication 10 et le deuxième équipement de communication 20. Ces différents chemins de communication cid2, cid3, cid4 sont établis au travers d'un ou plusieurs nœuds intermédiaires 11-18. Le premier chemin de communication cid3 est établi au travers des nœuds intermédiaires 13, 17 et 18. Le deuxième chemin de communication cid2 est établi au travers des nœuds intermédiaires 12 et 15. Le troisième chemin de communication cid4 est en cours d'établissement au travers des nœuds intermédiaires 11, 14 et 16.

De tels chemins de communication cid2, cid3, cid4 étant établis entre le premier équipement de communication 10 et le deuxième équipement de communication 20, seuls ces deux équipements de communication 10, 20 peuvent accéder au contenu des données transmises sur les chemins cid2, cid3, cid4. Ainsi, les nœuds intermédiaires 11-18 n'accèdent pas aux données transmises au travers des chemins cid2, cid3, cid4, ils se contentent de les transmettre à l'équipement suivant, soit un autre nœud intermédiaire, soit le deuxième équipement de communication 20. Il est bien entendu que certaines données dites de routage sont accessibles aux équipements intermédiaires pour acheminer les données mais pas les données comprises, par exemple, dans des champs transport ou applicatif des messages.

La **figure 1B** représente un deuxième système 1' dans lequel le procédé selon l'invention est mis en œuvre. Les éléments déjà décrits en référence à la figure 1A ont les mêmes références numériques.

Le système 1' comprend un premier équipement de communication 10', un tel équipement de communication 10' est par exemple un ordinateur capable d'exécuter plusieurs machines virtuelles.

Le système 1 comprend une pluralité de nœuds intermédiaires 11', 12', 13' et 14-18. Les nœuds intermédiaires 11'-13' sont des machines virtuelles hébergées dans le premier équipement intermédiaire 10'. Les nœuds intermédiaires 14-18 sont situés dans un ou plusieurs réseaux de communication. De tels nœuds intermédiaires 14-18 sont par exemples des routeurs. Les nœuds intermédiaires 11', 12', 13' et 14-18 sont capables d'exécuter une ou plusieurs fonctions de transmission.

Enfin, le système 1' comprend un deuxième équipement de communication 20 tel qu'un serveur par exemple.

Plusieurs chemins de communication cid2, cid3, cid4, au travers desquelles des données sont destinées à être transmises, sont établis ou en cours d'établissement entre le premier équipement de communication 10' et le deuxième équipement de communication 20. Ces différents chemins de communication cid2, cid3, cid4 sont établis au travers d'un ou plusieurs nœuds intermédiaires 11', 12', 13' et 14-18. Le premier chemin de communication cid3 est établi au travers des nœuds intermédiaires 13', 17 et 18. Le deuxième chemin de communication cid2 est établi au travers des nœuds intermédiaires 12' et 15. Le troisième chemin de communication cid4 est en cours d'établissement au travers des nœuds intermédiaires 11', 14 et 16.

De tels chemins de communication cid2, cid3, cid4 étant établis entre le premier équipement de communication 10' et le deuxième équipement de communication 20, seuls ces deux équipements de communication 10', 20 peuvent accéder au contenu des données transmises. Ainsi, les nœuds intermédiaires 11', 12', 13' et 14-18 n'accèdent pas aux données transmises au travers des chemins cid2, cid3, cid4, ils se contentent de les transmettre à l'équipement suivant soit un autre nœud intermédiaire soit le deuxième équipement de communication 20.

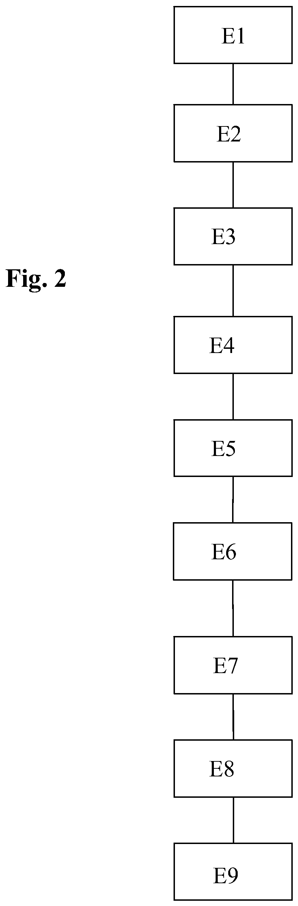

La **figure 2** représente les étapes du procédé selon l'invention lorsque celui-ci est mis en œuvre par les différents équipements constituant le système 1 ou le système 1'.

Le procédé est décrit pour une transmission de données depuis le premier équipement de communication 10, 10' vers le deuxième équipement de communication 20. Le procédé selon l'invention s'applique également à une transmission de données depuis le deuxième équipement de communication 20 vers le premier équipement de communication 10, 10'. Dans un tel cas de figure les étapes exécutées par le premier équipement de communication 10, 10' sont alors exécutées par le deuxième équipement de communication 20 et inversement les étapes exécutées par le deuxième équipement de communication 20 sont alors exécutées par le premier équipement de communication 10,10'.

Le procédé objet de l'invention est décrit dans le contexte où l'équipement de communication 10 découvre un nouveau chemin, le chemin cid4, vers le deuxième équipement de communication 20 suite à l'activation d'une connexion Wifi (*Wireless Fidelity*)*.* Dans un mode de réalisation de l'invention, les équipements de communication 10, 20 implémentent le protocole de transport QUICv1.

Dans un tel contexte, une connexion multi-chemins est établie conformément au protocole UDP (*User Datagram Protocol,* pour protocole de datagramme utilisateur) entre le premier et le deuxième équipement de communication 10, 10', 20 et est identifiée par un identifiant de connexion. Une fois cette connexion multi-chemins établie, plusieurs chemins appartenant à cette connexion multi-chemins peuvent être établis entre le premier équipement de communication 10, 10' et le deuxième équipement de communication 20. Chaque chemin est identifié par un quintuplé comprenant : une adresse source, une adresse destination, un port source, un port destination et un identifiant « cid » du chemin dans la connexion multi-chemin.

Dans d'autres modes de réalisation de l'invention, d'autres protocoles de transports peuvent être utilisés pour établir une connexion multi-chemins, tels que le protocole TCP (*Transmission Control Protocol,* pour protocole de contrôle de transmissions), MPTCP (*Multipath TCP,* pour protocole de contrôle de transmissions multi-chemins), SCTP (*Stream Control Transmission Protocol*) ou encore une combinaison de ces protocoles.

Dans une première étape E1 du procédé selon l'invention, le premier équipement de transmission 10, 10' émet, à destination du deuxième équipement de communication 20, un message de signalisation d'un chemin, tel qu'un message Path_Challenge, au travers d'un nouveau chemin cid4 à ajouter à la connexion multi-chemin établie entre le premier équipement de communication 10, 10' et le deuxième équipement de communication 20. Une telle connexion multi-chemin comprend déjà le chemin cid3 et le chemin cid2.

Un message Path_Challenge est un message permettant l'établissement d'un chemin entre deux équipements de communication et la vérification des caractéristiques du chemin. Un message Path_Challenge peut être émis de manière périodique sur un chemin établi.

Dans une étape E2, le nœud intermédiaire 11, 11' intercepte le message de signalisation transmis par le premier équipement de communication 10, 10' sur le chemin cid4.

Dans une étape E3, le nœud intermédiaire 11, 11' transmet au moins un paramètre représentatif d'au moins une fonction de transmission ou au moins une combinaison de fonctions de transmission hébergées dans le nœud intermédiaire 11, 11'. En référence aux figures 1A t 1B, le nœud intermédiaire 11, 11' héberge une fonction A.

Les fonctions de transmission hébergées dans les nœuds intermédiaires sont par exemple des fonctions élémentaires de transport :

**Table 1**

| **TP** | **nom de la fonction** | **supporté ?** |
|---|---|---|
| 1 | Unicast | 0 |
| 2 | Mcast/IPv4Bcast | 0 |
| 3 | Port Mux | 0 |
| 4 | Connected | 0 |
| 5 | Data bundling | 0 |
| 6 | Feature Nego | 0 |
| 7 | Data priority | 0 |
| 8 | Data bundling | 0 |
| 9 | Reliability | 0 |
| 10 | Ordered deliv | 0 |
| 11 | Corruption Tol. | 0 |
| 12 | Flow Control | 0 |
| 13 | PMTU/PLPMTU | 0 |
| 14 | Cong Control | 0 |
| 15 | ECN Support | 0 |
| 16 | NAT support | 0 |
| 18 | ... | |
| | | |

ou encore des fonctions élémentaires de sécurité du transport :

**Table 2**

| **TS** | **nom de la fonction** | **supporté ?** |
|---|---|---|
| 1 | Forward-secure segment encryption and authentication | 0 |
| 2 | Private key interface or injection | 0 |
| 3 | Mutual authentication | 0 |
| 4 | Endpoint authentication | 0 |
| 5 | Identity Validation | 0 |
| 6 | Source Address Validation | 0 |
| 7 | Pre-Shared Key Export | 0 |
| 8 | Pre-Shared Key Import | 0 |
| 9 | Encrypt application data | 0 |
| 10 | Decrypt application data | 0 |
| 11 | Application-layer feature negotiation | 0 |
| 12 | Configuration extensions | 0 |
| 13 | Session caching and management | 0 |
| 14 | Connection mobility | 0 |
| 15 | Key Update | 0 |
| 16 | Key Expiration | 0 |
| 17 | Session Cache | 0 |
| 18 | Authentication Delegation | 0 |
| 19 | Supported Algorithms (Key Exchange, Signatures, and Ciphersuites) | 0 |
| 20 | Identity and Private Keys | 0 |
| 21 | Send Handshake Messages | 0 |
| 22 | Receive Handshake Messages | 0 |

ou encore des fonctions élémentaires applicatives :

**Table 3**

| **APP** | **nom de la fonction** | **supporté ?** |
|---|---|---|
| 1 | caching | 0 |
| 2 | compression | 0 |
| 3 | datation | 0 |
| 4 | cooperation | 0 |
| 5 | streaming | 0 |

Dans un premier mode de réalisation de l'invention, le nœud intermédiaire 11, 11' modifie le message de signalisation en ajoutant le paramètre représentatif de la fonction de transmission dans un champ du message de signalisation prévu à cet effet. Le nœud intermédiaire 11, 11' n'accède pas au contenu du message reçu de signalisation, il se contente de rajouter une information dans un champ spécifique de ce message.

Dans un deuxième mode de réalisation de l'invention, le nœud intermédiaire 11, 11' émet un message de service comprenant dans au moins l'un de ses champs le paramètre représentatif de la fonction de transmission. Un tel message de service peut être concaténé avec le message de signalisation en utilisant par exemple une technique de concaténation telle que celle décrite dans le document de travail de l'IETF nommé « The Concatenation of IP Packets draft-moon-ipsec-ipconc-00.txt » en date du 02 décembre 2002 et disponible à l'URL suivante : https://tools.ietf.org/html/draft-moon-ipsec-ipconc-00.

Le but d'une telle technique de concaténation est de réduire le nombre de paquets IP (*Internet Protocol,* pour protocole Internet) destinés à être transmis.

Le paramètre représentatif de la fonction de transmission se présente, dans un mode de réalisation de l'invention, sous la forme d'un registre de 32 bits par exemple. Un message peut contenir autant de registres que de types de fonction de transmission, par exemple un registre contenant les paramètres représentatifs de fonctions de transport, un registre contenant les paramètres représentatifs de fonctions de sécurité du transport et un registre contenant les paramètres représentatifs de fonctions applicatives.

Lorsque le procédé selon l'invention est implémenté conformément au protocole QUIC, la sémantique des messages de type Path_Challenge est étendue afin de pouvoir ajouter les registres dans le message de signalisation ou dans le message de service.

Les étapes E2 et E3 sont exécutées par chaque nœud intermédiaire 11, 11', 14, 16 au travers desquels le chemin cid4 est établi.

Dans une étape E4, le deuxième équipement de communication 20 reçoit le message de signalisation et, selon le mode de réalisation de l'invention, le message de service.

Le message de signalisation comprend au moins un premier paramètre représentatif du type de données destinées à être transmises entre le premier et le deuxième équipement de communication 10, 10', 20 et un deuxième paramètre indiquant si la transmission de données entre le premier et le deuxième équipement de communication 10, 10', 20 est bidirectionnelle.

Dans une étape E5, le deuxième équipement de communication 20 sélectionne, sur la base du premier paramètre représentatif du type de données destinées à être transmises entre le premier et le deuxième équipement de communication 10, 10', 20 et des paramètres représentatifs des différentes fonctions de transmission ou combinaisons de fonctions de transmission reçus dans le message de signalisation ou dans le message de service, un chemin cid3, cid2 ou cid4 au travers duquel les données identifiées par le premier paramètre sont destinées à être transmises.

Dans une étape E6, le deuxième équipement 20 émet un message d'acquittement, du type Path_Response, à destination du premier équipement. Ce message d'acquittement comprend dans au moins un de ses champs au moins un paramètre représentatif du chemin sélectionné. Dans un mode de réalisation de l'invention, le message d'acquittement comprend également le deuxième paramètre indiquant que la transmission de données entre le premier et le deuxième équipement de communication 10, 10', 20 est bidirectionnelle.

Dans un mode de réalisation de l'invention, à réception du message d'acquittement, le premier équipement de communication 10, 10' détermine le chemin qui est utilisé pour la transmission des données entre le premier équipement de communication 10, 10' et le deuxième équipement de communication 20.

Dans le cas où la transmission des données est bidirectionnelle, le nœud intermédiaire 16 intercepte le message d'acquittement au cours d'une étape E7.

Dans une étape E8, le nœud intermédiaire 16 active la ou les fonctions de transmission destinée à être exécutée par ledit nœud intermédiaire 16 et identifiées dans le message d'acquittement.

Dans un premier mode de réalisation, le nœud intermédiaire 16 active la ou les fonctions de transmission destinée à être exécutée pour les données émises par le premier équipement de communication 10, 10' à destination du deuxième équipement de communication 20.

Dans un deuxième mode de réalisation, le nœud intermédiaire 16 active la ou les fonctions de transmission destinée à être exécutée pour les données émises par le deuxième équipement de communication 20 à destination du premier équipement de communication 10, 10'.

Dans le premier et le deuxième mode de réalisation, les données sont transmises de manière bidirectionnelle entre le premier et le deuxième équipement de communication 10, 10', 20 mais ne sont pas transmises au travers du même chemin selon que les données ont été émises par le premier équipement de communication 10, 10' ou le deuxième équipement de communication 20. Ainsi, les nœuds intermédiaires des chemins concernés activent leurs fonctions en fonction de l'équipement de communication qui émet les données qui traverseront le chemin. Par exemple les données émises par le premier équipement de communication 10, 10' sont transmises vers le deuxième équipement de communication 20 au travers d'un chemin comprenant les nœuds intermédiaires 11, 14, 17 et 18. Ces nœuds intermédiaires activent la ou leurs fonctions de transmission pour le sens de transmission du premier équipement de communication 10, 10' vers le deuxième équipement de communication 20. Les données émises par le deuxième équipement de communication 20 sont, quant à elles, transmises vers le premier équipement de communication 10, 10' au travers d'un chemin comprenant les nœuds intermédiaires 11 et 14. Ces nœuds intermédiaires activent la ou leurs fonctions de transmission pour le sens de transmission du deuxième équipement de communication 20 vers le premier équipement de communication 10,10'.

Enfin, dans un troisième mode de réalisation, les données sont transmises de manière bidirectionnelle et symétrique entre le premier et le deuxième équipement de communication 10, 10', 20. Les données émises par le premier et le deuxième équipement de communication 10,10', 20 sont transmises au travers du même chemin. Dans ce troisième mode de réalisation, le nœud intermédiaire 16 active la ou les fonctions de transmission pour les deux sens de transmission.

Dans une étape E9, le nœud intermédiaire 16 transmet le message d'acquittement à destination du premier équipement de communication 10, 10'.

Les étapes E7 à E9 sont exécutées par chaque nœud intermédiaire 14, 11, 11', au travers desquels le chemin cid4 est établi. Ainsi les données transmises par le deuxième équipement de communication 20 bénéficient des traitements appropriés.

Dans un premier mode de réalisation, le message d'acquittement comprend un identifiant du chemin sectionné et une liste des fonctions de transmission à activer lors de la transmission des données au travers du chemin : Path_Response (cid4:ABC).

Dans un deuxième mode de réalisation, le message d'acquittement comprend en outre un paramètre de mise à jour d'un fichier de routage du premier équipement de communication 10, 10', ledit fichier étant destiné à être mis à jour avec ledit au moins un paramètre représentatif du chemin sélectionné.

Dans cette implémentation, le message d'acquittement comprend un message de type JSON PATCH. Un tel message JSON PATCH indique qu'un fichier doit être mis à jour est comprend les informations nécessaires à la mise à jour de ce fichier. Ici, le fichier à mettre à jour est par exemple un fichier de routage du premier équipement de communication du type proxy.PAC. Le message d'acquittement comprend, par exemple, les informations suivantes : Path_Response ({ "op": "add", "path": "coap", "value": {" PROXY ": iot-proxy.mydomain.com:443} } ).

Un fichier de type proxy.PAC est un fichier de Configuration Automatique de Proxy. Un tel fichier définit, par exemple, la façon selon laquelle un navigateur web ou d'autres fonctionnalités équivalentes, regroupées sous le nom de « User Agents », se connecte à Internet : il leur permet d'utiliser automatiquement le proxy approprié à l'URL demandée.

Dans un troisième mode de réalisation, les données transmises entre le premier équipement de communication 10, 10' et le deuxième équipement de communication on besoin d'être horodatées.

Le deuxième équipement de communication 20 reçoit une liste de fonctions élémentaires hébergées par les différents nœuds intermédiaires : le nœud intermédiaire 11 héberge la fonction « APP.4 », le nœud intermédiaire 12 héberge la fonction « TS.10 », le nœud intermédiaire 14 héberge la fonction « APP.3 », le nœud intermédiaire 15 héberge la fonction « APP.4 », le nœud intermédiaire 16 héberge la fonction « APP.4 »; le nœud intermédiaire 17 héberge la fonction « TS.9 ». Ainsi, les nœuds intermédiaires annoncent leurs capacités à coopérer (APP.4), à dater (APP.3), à déchiffrer (TS.10) et à chiffrer (TS.9).

Dans son message d'acquittement, le deuxième équipement de communication 20 indique au premier équipement de communication 10, 10' de router les requêtes du type « coaps:// » au travers du chemin cid4 en précisant explicitement de les faire dater par le nœud intermédiaire 14 :

```
 { scheme: 'coaps', cid:'cid4', combo: {decrypt:'TS.10', datation: 'APP.3', encrypt: 'TS.9'
 } }
```

Lorsque la transmission de données entre le premier et le deuxième équipement de communication 10, 10', 20 est bidirectionnelle, les nœuds intermédiaires identifient les fonctions requises afin de les activer. Suivant leurs règles de gestion, les nœuds intérimaires peuvent supprimer certaines combinaisons de fonctions qui ne leur conviennent pas, par exemples lors d'une incompatibilité de l'ordre des fonctions : 'A.TS.10' est incompatible avec 'C.TS.9' puisque le déchiffrement doit être réalisé avant le chiffrement, etc.

Enfin dans un quatrième mode de réalisation, un paramètre représentatif du chemin sélectionné comprend au moins une empreinte numérique identifiant au moins une fonction de transmission destinée à être exécutée et au moins un nœud intermédiaire adapté pour exécuter ladite au moins une fonction de transmission.

Dans ce mode de réalisation de l'invention, le deuxième équipement de communication 20 identifie les fonctions de transmission ou les combinaisons de fonctions de transmission au moyen d'une empreinte numérique ou « hash ».

Par exemple la fonction de transmission A.TS.10 est identifiée par l'empreinte numérique 'RZQzaYIvAfGkrK8o9KTnLBvU3ASVYWmJlg9bqq/kNQM=', la fonction de transmission B.APP.3 est identifiée par l'empreinte numérique 'N3U/OXkuAhtBnG9mgqyS9AlGQpIRwoJsc3XgLfaaiVM=' et la fonction de transmission C.TS.9 est identifiée par l'empreinte numérique 'uiYsiHicU+PlHm5BZiDe3Df64oGD4FnK+qGe81RtF1k='.

Le message d'acquittement contient les paramètres suivants :

```
  {
      scheme: 'coaps',
      cid: 'cid4',
      combo: [
           'RZQzaYIvAfGkrK8o9KTnLBvU3ASVYWmJlg9bqq/kNQM=,
           'N3U/OXkuAhtBnG9mgqyS9AlGQpIRwoJsc3XgLfaaiVM=,
           'uiYsiHicU+PlHm5BZiDe3Df64oGD4FnK+qGe81RtF1k='
          ]
   }
```

Dans le cas présent chaque empreinte numérique correspond à une fonction élémentaire d'un nœud intermédiaire bien précise du chemin cid4 (A.TS.10, B.APP.3 et C.TS.9.). Seules les entités connaissant le secret partagé 'pwdcltsrv', le nom des nœuds intermédiaires et le nom des fonctions de transmission peuvent générer les identifiants des fonctions demandées.

Dans le cas d'une transmission bidirectionnelle, les nœuds intermédiaires connaissant le secret partagé, c'est à dire les empreintes numériques, interprètent les messages d'acquittement et identifient les fonctions de transissions demandées afin de les activer.

Reprenant l'exemple précédant, la fonction de transmission composite 'TS.10,APP.3,TS.9' (déchiffrer, dater et chiffrer) est identifiée par l'empreinte numérique JWT 'sltZFWJwSmXeByiyKGwN260vZHChqa5QIvSrDj1RNOM=.

Le premier équipement de communication 10, 10' reçoit l'indication, dans le message d'acquittement, de router les requêtes du scheme « coaps:// » vers la fonction composite au travers du chemin cid3 ou du chemin cid4 :

```
 { combo: 'sltZFWJwSmXeByiyKGwN260vZHChqa5QIvSrDj1RNOM=', cid:'cid3' }
```

```
 { combo: 'sltZFWJwSmXeByiyKGwN260vZHChqa5QIvSrDj1RNOM=', cid:'cid4' }
```

Ainsi, le premier équipement de communication 10, 10' route les requêtes 'coaps://' indifféremment dans les chemins cid4 ou cid3.

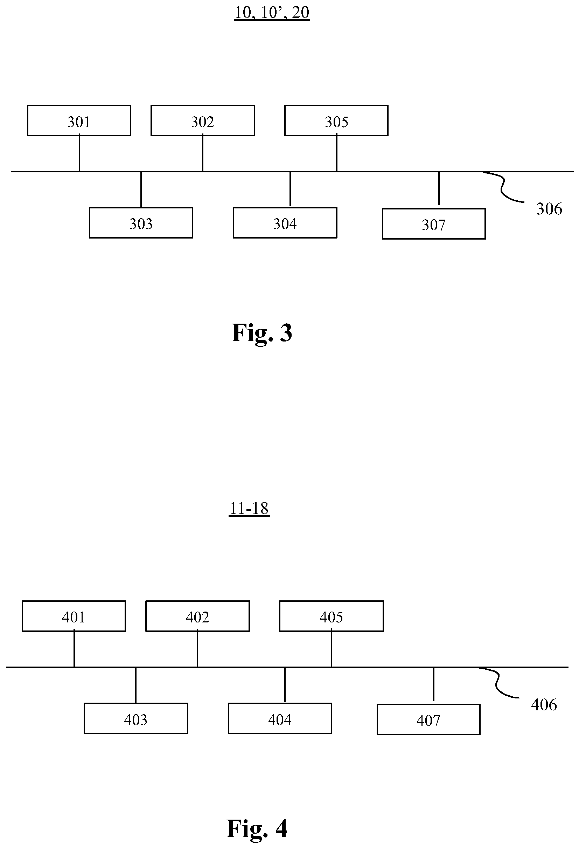

La **figure 3** représente de manière schématique un équipement de communication 10, 10', 20.

L'équipement de communication 10, 10', 20, peut comprendre au moins un processeur matériel 301, une unité de stockage 302, un dispositif de saisie 303, un dispositif d'affichage 304, une unité d'interface 305, et une interface de réseau 307 qui sont connectés entre eux au travers d'un bus 306. Bien entendu, les éléments constitutifs de l'équipement de communication 10,10', 20 peuvent être connectés au moyen d'une connexion autre qu'un bus.

Le processeur 301 commande les opérations de l'équipement de communication 10, 10', 20. L'unité de stockage 302 stocke au moins un programme pour sélectionner un chemin, à exécuter par le processeur 301, et diverses données, telles que des paramètres utilisés pour des calculs effectués par le processeur 301, des données intermédiaires de calculs effectués par le processeur 301, etc. Le processeur 301 peut être formé par tout matériel ou logiciel connu et approprié, ou par une combinaison de matériel et de logiciel. Par exemple, le processeur 301 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 302 peut être formée par n'importe quel moyen approprié capable de stocker le programme, des données d'une manière lisible par un ordinateur. Des exemples d'unité de stockage 302 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture. Le programme amène le processeur 301 à exécuter un procédé de sélection d'un chemin selon un mode de réalisation de l'invention.

Le dispositif de saisie 303 peut être formé par un clavier, un dispositif de pointage tel qu'une souris à utiliser par un utilisateur pour entrer des commandes. Le dispositif d'affichage 304 peut être formé par un dispositif d'affichage pour afficher, tel que par exemple une interface graphique utilisateur (GUI). Le dispositif de saisie 303 et le dispositif d'affichage 304 peuvent être formés intégralement au moyen d'un écran tactile, par exemple.

L'unité d'interface 305 fournit une interface entre l'équipement de communication 10, 10', 20 et un appareil externe. L'unité d'interface 305 peut communiquer avec l'appareil externe via une connexion filaire ou sans fil. Un tel appareil externe est par exemple un décodeur numérique ou un « smartphone ».

Une interface réseau 307 fournit une connexion entre l'équipement de communication 10, 10', 20 et un nœud intermédiaire via un réseau de communication, tel qu'Internet. L'interface réseau 307 peut fournir, en fonction de sa nature, une connexion filaire ou sans fil au réseau.

La **figure 4** représente de manière schématique un nœud intermédiaire 11-18.

Le nœud intermédiaire 11-18, peut comprendre au moins un processeur matériel 401, une unité de stockage 402, un dispositif de saisie 403, un dispositif d'affichage 404, une unité d'interface 405, et une interface de réseau 407 qui sont connectés entre eux au travers d'un bus 406. Bien entendu, les éléments constitutifs du nœud intermédiaire 11-18 peuvent être connectés au moyen d'une connexion autre qu'un bus.

Le processeur 401 commande les opérations du nœud intermédiaire 11-18. L'unité de stockage 302 stocke au moins un programme pour découvrir une fonction de transmission, à exécuter par le processeur 401, et diverses données, telles que des paramètres utilisés pour des calculs effectués par le processeur 401, des données intermédiaires de calculs effectués par le processeur 401, etc. Le processeur 401 peut être formé par tout matériel ou logiciel connu et approprié, ou par une combinaison de matériel et de logiciel. Par exemple, le processeur 401 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 402 peut être formée par n'importe quel moyen approprié capable de stocker le programme, et des données d'une manière lisible par un ordinateur. Des exemples d'unité de stockage 402 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture. Le programme amène le processeur 401 à exécuter un procédé de découverte d'une fonction de transmission selon un mode de réalisation de l'invention.

Le dispositif de saisie 403 peut être formé par un clavier, un dispositif de pointage tel qu'une souris à utiliser par un utilisateur pour entrer des commandes. Le dispositif d'affichage 404 peut être formé par un dispositif d'affichage pour afficher, tel que par exemple une interface graphique utilisateur (GUI). Le dispositif de saisie 403 et le dispositif d'affichage 404 peuvent être formés intégralement au moyen d'un écran tactile, par exemple.

L'unité d'interface 405 fournit une interface entre le nœud intermédiaire 11-18 et un appareil externe. L'unité d'interface 405 peut communiquer avec l'appareil externe via une connexion filaire ou sans fil. Un tel appareil externe est par exemple un ordinateur portable.

Une interface réseau 407 fournit une connexion entre le nœud intermédiaire 11-18 et un autre nœud intermédiaire 11-18 via un réseau de communication, tel qu'Internet. L'interface réseau 407 peut fournir, en fonction de sa nature, une connexion filaire ou sans fil au réseau.

## Revendications

1. Procédé de découverte d'au moins une fonction relative à la transmission de données, dite fonction de transmission, destinée à être exécutée par au moins un nœud intermédiaire d'au moins un chemin établi entre un premier équipement de communication et un deuxième équipement de communication, ledit procédé étant exécuté par ledit au moins un nœud intermédiaire et comprenant :
- une étape d'interception d'un message de signalisation dudit chemin émis par le premier équipement de communication à destination du deuxième équipement de communication,
- une étape de transmission, à destination dudit deuxième équipement de communication, dudit message de signalisation ou d'un message de service comprenant au moins un paramètre représentatif de ladite fonction de transmission, et au moins un deuxième paramètre représentatif du type de données destinées à être transmises entre le premier et le deuxième équipement de communication.

2. Procédé selon la revendication 1, **caractérisé en ce que** ledit message transmis est le message de signalisation, le procédé comprenant également une étape de modification dudit message de signalisation en ajoutant ledit au moins un paramètre représentatif de ladite fonction de transmission dans au moins un champ dudit message de signalisation.

3. Procédé selon la revendication 2, **caractérisé en ce que** ladite étape de modification dudit message de signalisation comprend une étape de remplacement des informations de bourrage comprises dans un champ dudit message de signalisation par ledit au moins un paramètre représentatif de ladite fonction de transmission.

4. Procédé selon la revendication 1, caractérisé en ce ledit message transmis est un message de service émis par ledit au moins un nœud intermédiaire, ledit message de service étant concaténé au message de signalisation.

5. Procédé selon la revendication 1, **caractérisé en ce que** ledit paramètre représentatif de ladite fonction de transmission comprend une liste de paramètres représentatifs de combinaisons de fonctions de transmission destinées à être exécutées par un même nœud intermédiaire.

6. Procédé selon la revendication 1, **caractérisé en ce que** ledit message de signalisation est transmis entre le premier et le deuxième équipement de communication lors de l'établissement dudit chemin.

7. Procédé de sélection d'au moins un chemin établi entre un premier équipement de communication et un deuxième équipement de communication, ledit chemin comprenant au moins un nœud intermédiaire adapté pour exécuter au moins une fonction relative à la transmission de données, dite fonction de transmission, ledit procédé étant exécuté par le deuxième équipement de communication et comprenant :
- une étape de sélection d'un chemin au travers duquel lesdites données sont destinées à être transmises en fonction d'au moins un premier paramètre représentatif de ladite fonction de transmission et d'au moins un deuxième paramètre représentatif du type de données destinées à être transmises entre le premier et le deuxième équipement de communication, ladite étape de sélection étant déclenchée par la réception d'au moins un message de signalisation ou d'un message de service, en provenance dudit au moins un nœud intermédiaire, comprenant lesdits premier et deuxième paramètres, et
- une étape d'émission d'un message d'acquittement à destination du premier équipement de communication comprenant dans au moins un de ses champs au moins un paramètre représentatif du chemin sélectionné.

8. Procédé selon la revendication 7 **caractérisé en ce que**, ledit au moins un message reçu étant un message de signalisation dudit chemin comprenant au moins un paramètre indiquant que lesdites données sont destinées à être transmises de manière bidirectionnelle entre le premier et le deuxième équipement de communication, le procédé comprend en outre les étapes suivantes exécutées par ledit nœud intermédiaire :
- Interception dudit message d'acquittement,
- Activation de ladite au moins une fonction de transmission destinée à être exécutée par ledit nœud intermédiaire,
- Transmission dudit message d'acquittement à destination du premier équipement de communication.

9. Procédé selon la revendication 7 **caractérisé en ce que** message d'acquittement comprend en outre un paramètre de mise à jour d'un fichier de routage du premier équipement de communication, ledit fichier étant destiné à être mis à jour avec ledit au moins un paramètre représentatif du chemin sélectionné.

10. Procédé selon la revendication 7 ou 8 **caractérisé en ce que** ledit au moins un paramètre représentatif du chemin sélectionné comprend une liste des fonctions de transmissions destinées à être exécutées par ledit au moins un nœud intermédiaire.

11. Procédé selon la revendication 7 ou 8 **caractérisé en ce que** ledit au moins un paramètre représentatif du chemin sélectionné comprend une liste de fonctions de transmission à exécuter ainsi qu'un identifiant d'au moins un nœud intermédiaire adapté pour exécuter chacune des fonctions de transmission listées.

12. Procédé selon la revendication 7 ou 8 **caractérisé en ce que** ledit au moins un paramètre représentatif du chemin sélectionné comprend au moins une empreinte numérique identifiant au moins une fonction de transmission destinée à être exécutée et au moins un nœud intermédiaire adapté pour exécuter ladite au moins une fonction de transmission.

13. Nœud intermédiaire d'un chemin établi entre un premier équipement de communication et un deuxième équipement de communication, ledit nœud intermédiaire étant adapté pour exécuter une fonction relative à la transmission de données, dite fonction de transmission, et comprenant :
- des moyens d'interception d'un message de signalisation dudit chemin émis par le premier équipement de communication à destination du deuxième équipement de communication,
- des moyens de transmission, à destination dudit deuxième équipement de communication, d'un message comprenant au moins un paramètre représentatif de ladite fonction de transmission, et au moins un deuxième paramètre représentatif du type de données destinées à être transmises entre le premier et le deuxième équipement de communication.

14. Equipement de communication adapté pour sélectionner au moins un chemin établi entre ledit équipement de communication et un autre équipement de communication, ledit chemin comprenant au moins un nœud intermédiaire adapté pour exécuter au moins une fonction relative à la transmission de données, dite fonction de transmission, ledit équipement de communication comprenant :
- des moyens de réception d'au moins un message de signalisation ou d'un message de service, provenant dudit au moins un nœud intermédiaire, comprenant au moins un paramètre représentatif de ladite fonction de transmission et au moins un paramètre représentatif du type de données destinées à être transmises entre ledit équipement de communication et l'autre équipement de communication,
- des moyens de sélection d'un chemin au travers duquel lesdites données sont destinées à être transmises en fonction dudit au moins un paramètre représentatif de ladite fonction de transmission et dudit au moins un paramètre représentatif du type de données destinées à être transmises,
- des moyens d'émission d'un message d'acquittement à destination de l'autre équipement de communication comprenant dans au moins un de ses champs au moins un paramètre représentatif du chemin sélectionné.

15. Produit programme d'ordinateur comprenant des instructions de code de programme pour la mise en œuvre d'un procédé selon l'une quelconque des revendications 1 à 5, lorsqu'il est exécuté par un processeur.

16. Produit programme d'ordinateur comprenant des instructions de code de programme pour la mise en œuvre d'un procédé selon l'une quelconque des revendications 7 à 12, lorsqu'il est exécuté par un processeur.

## Patentansprüche

1. Verfahren zur Entdeckung mindestens einer Funktion bezüglich der Übertragung von Daten, Übertragungsfunktion genannt, die dazu bestimmt ist, von mindestens einem Zwischenknoten mindestens eines zwischen einer ersten Kommunikationseinrichtung und einer zweiten Kommunikationseinrichtung aufgebauten Pfads ausgeführt zu werden, wobei das Verfahren von dem mindestens einen Zwischenknoten ausgeführt wird und umfasst:
- einen Schritt des Abfangens einer Signalisierungsnachricht des Pfads, die von der ersten Kommunikationseinrichtung an die zweite Kommunikationseinrichtung gesendet wird,
- einen Schritt des Übertragens, an die zweite Kommunikationseinrichtung, der Signalisierungsnachricht oder einer Dienstnachricht, die mindestens einen für die Übertragungsfunktion repräsentativen Parameter und mindestens einen zweiten Parameter, der für den Typ von Daten, die zwischen der ersten und der zweiten Kommunikationseinrichtung übertragen werden sollen, repräsentativ ist, umfasst.

2. Verfahren nach Anspruch 1, **dadurch gekennzeichnet, dass** die übertragene Nachricht die Signalisierungsnachricht ist, wobei das Verfahren auch einen Schritt des Änderns der Signalisierungsnachricht umfasst, indem der mindestens eine für die Übertragungsfunktion repräsentative Parameter in mindestens einem Feld der Signalisierungsnachricht hinzugefügt wird.

3. Verfahren nach Anspruch 2, **dadurch gekennzeichnet, dass** der Schritt des Änderns der Signalisierungsnachricht einen Schritt des Ersetzens der in einem Feld der Signalisierungsnachricht enthaltenen Stopfinformationen durch den mindestens einen für die Übertragungsfunktion repräsentativen Parameter umfasst.

4. Verfahren nach Anspruch 1, **dadurch gekennzeichnet, dass** die übertragene Nachricht eine von dem mindestens einen Zwischenknoten gesendete Dienstnachricht ist, wobei die Dienstnachricht mit der Signalisierungsnachricht konkateniert ist.

5. Verfahren nach Anspruch 1, **dadurch gekennzeichnet, dass** der für die Übertragungsfunktion repräsentative Parameter eine Liste mit Parametern umfasst, die für Kombinationen von Übertragungsfunktionen repräsentativ sind, die dazu bestimmt sind, von einem selben Zwischenknoten ausgeführt zu werden.

6. Verfahren nach Anspruch 1, **dadurch gekennzeichnet, dass** die Signalisierungsnachricht zwischen der ersten und der zweiten Kommunikationseinrichtung beim Aufbauen des Pfads übertragen wird.

7. Verfahren zum Auswählen mindestens eines zwischen einer ersten Kommunikationseinrichtung und einer zweiten Kommunikationseinrichtung aufgebauten Pfads, wobei der Pfad mindestens einen Zwischenknoten umfasst, der zum Ausführen mindestens einer Funktion bezüglich der Übertragung von Daten, Übertragungsfunktion genannt, angepasst ist, wobei das Verfahren von der zweiten Kommunikationseinrichtung ausgeführt wird und umfasst:
- einen Schritt des Auswählens eines Pfads, über den die Daten übertragen werden sollen, in Abhängigkeit von mindestens einem ersten für die Übertragungsfunktion repräsentativen Parameter und mindestens einem zweiten Parameter, der für den Typ von Daten, die zwischen der ersten und der zweiten Kommunikationseinrichtung übertragen werden sollen, repräsentativ ist, wobei der Schritt des Auswählens durch das Empfangen mindestens einer Signalisierungsnachricht oder einer Dienstnachricht von dem mindestens einen Zwischenknoten ausgelöst wird, die diese ersten und zweiten Parameter umfasst, und
- einen Schritt des Sendens einer Quittierungsnachricht an die erste Kommunikationseinrichtung, die in mindestens einem ihrer Felder mindestens einen für den ausgewählten Pfad repräsentativen Parameter umfasst.

8. Verfahren nach Anspruch 7, **dadurch gekennzeichnet, dass** das Verfahren, wenn die mindestens eine empfangene Nachricht eine Signalisierungsnachricht des Pfads ist, die mindestens einen Parameter umfasst, der angibt, dass die Daten bidirektional zwischen der ersten und der zweiten Kommunikationseinrichtung übertragen werden sollen, ferner die folgenden von dem Zwischenknoten ausgeführten Schritte umfasst:
- Abfangen der Quittierungsnachricht,
- Aktivieren der mindestens einen Übertragungsnachricht, die dazu bestimmt ist, von dem Zwischenknoten ausgeführt zu werden,
- Übertragen der Quittierungsnachricht an die erste Kommunikationseinrichtung.

9. Verfahren nach Anspruch 7, **dadurch gekennzeichnet, dass** die Quittierungsnachricht ferner einen Parameter zur Aktualisierung einer Routingdatei der ersten Kommunikationseinrichtung umfasst, wobei die Datei dazu bestimmt ist, mit dem mindestens einen für den ausgewählten Pfad repräsentativen Parameter aktualisiert zu werden.

10. Verfahren nach Anspruch 7 oder 8, **dadurch gekennzeichnet, dass** der mindestens eine für den ausgewählten Pfad repräsentative Parameter eine Liste der Übertragungsfunktionen umfasst, die dazu bestimmt sind, von dem mindestens einen Zwischenknoten ausgeführt zu werden.

11. Verfahren nach Anspruch 7 oder 8, **dadurch gekennzeichnet, dass** der mindestens eine für den ausgewählten Pfad repräsentative Parameter eine Liste mit auszuführenden Übertragungsfunktionen sowie eine Kennung mindestens eines Zwischenknotens, der zum Ausführen jeder der gelisteten Übertragungsfunktionen angepasst ist, umfasst.

12. Verfahren nach Anspruch 7 oder 8, **dadurch gekennzeichnet, dass** der mindestens eine für den ausgewählten Pfad repräsentative Parameter mindestens einen digitalen Fingerabdruck umfasst, der mindestens eine Übertragungsfunktion kennzeichnet, die dazu bestimmt ist, ausgeführt zu werden, und mindestens einen Zwischenknoten, der zum Ausführen der mindestens einen Übertragungsfunktion angepasst ist.

13. Zwischenknoten eines zwischen einer ersten Kommunikationseinrichtung und einer zweiten Kommunikationseinrichtung aufgebauten Pfads, wobei der Zwischenknoten zum Ausführen einer Funktion bezüglich der Übertragung von Daten, Übertragungsfunktion genannt, angepasst ist und umfasst:
- Mittel zum Abfangen einer Signalisierungsnachricht des Pfads, die von der ersten Kommunikationseinrichtung an die zweite Kommunikationseinrichtung gesendet wird,
- Mittel zum Übertragen, an die zweite Kommunikationseinrichtung, einer Nachricht, die mindestens einen für die Übertragungsfunktion repräsentativen Parameter und mindestens einen zweiten Parameter, der für den Typ von Daten, die zwischen der ersten und der zweiten Kommunikationseinrichtung übertragen werden sollen, repräsentativ ist, umfasst.

14. Kommunikationseinrichtung, die dazu angepasst ist, mindestens einen zwischen der Kommunikationseinrichtung und einer anderen Kommunikationseinrichtung aufgebauten Pfad auszuwählen, wobei der Pfad mindestens einen Zwischenknoten umfasst, der dazu angepasst ist, mindestens eine Funktion bezüglich der Übertragung von Daten, Übertragungsfunktion genannt, auszuführen, wobei die Kommunikationseinrichtung umfasst:
- Mittel zum Empfangen mindestens einer Signalisierungsnachricht oder einer Dienstnachricht von dem mindestens einen Zwischenknoten, die mindestens einen für die Übertragungsfunktion repräsentativen Parameter und mindestens einen Parameter, der für den Typ von Daten, die zwischen der Kommunikationseinrichtung und der anderen Kommunikationseinrichtung übertragen werden sollen, repräsentativ ist, umfasst,
- Mittel zum Auswählen eines Pfads, über den die Daten übertragen werden sollen, in Abhängigkeit von dem mindestens einen für die Übertragungsfunktion repräsentativen Parameter und dem mindestens einen für den Typ von Daten, die übertragen werden sollen, repräsentativen Parameter,
- Mittel zum Senden einer Quittierungsnachricht an die andere Kommunikationseinrichtung, die in mindestens einem ihrer Felder mindestens einen für den ausgewählten Pfad repräsentativen Parameter umfasst.

15. Computerprogrammprodukt, das Programmcodeanweisungen umfasst, die bei seiner Ausführung durch einen Prozessor das Verfahren nach einem der Ansprüche 1 bis 5 durchführen.

16. Computerprogrammprodukt, das Programmcodeanweisungen umfasst, die bei seiner Ausführung durch einen Prozessor das Verfahren nach einem der Ansprüche 7 bis 12 durchführen.

## Claims

1. Method of discovering at least one function relating to data transmission, referred to as the transmission function, intended to be executed by at least one intermediate node of at least one path established between a first communication equipment and a second communication equipment, said method being executed by said at least one intermediate node and comprising:
- a step of intercepting a signalling message of said path sent by the first communication equipment to the second communication equipment,
- a step of transmitting, to said second communication equipment, said signalling message or a service message comprising at least one parameter representative of said transmission function, and at least a second parameter representative of the type of data intended to be transmitted between the first and the second communication equipment.

2. Method according to Claim 1, **characterized in that** said transmitted message is the signalling message, the method also comprising a step of modifying said signalling message by adding said at least one parameter representative of said transmission function to at least one field of said signalling message.

3. Method according to Claim 2, **characterized in that** said step of modifying said signalling message comprises a step of replacing stuffing information comprised in a field of said signalling message with said at least one parameter representative of said transmission function.

4. Method according to Claim 1, **characterized in that** said transmitted message is a service message sent by said at least one intermediate node, said service message being concatenated with the signalling message.

5. Method according to Claim 1, **characterized in that** said parameter representative of said transmission function comprises a list of parameters representative of combinations of transmission functions intended to be executed by the same intermediate node.

6. Method according to Claim 1, **characterized in that** said signalling message is transmitted between the first and the second communication equipment during the establishment of said path.

7. Method of selecting at least one path established between a first communication equipment and a second communication equipment, said path comprising at least one intermediate node designed to execute at least one function relating to data transmission, referred to as the transmission function, said method being executed by the second communication equipment and comprising:
- a step of selecting a path through which said data are intended to be transmitted on the basis of at least a first parameter representative of said transmission function and at least a second parameter representative of the type of data intended to be transmitted between the first and the second communication equipment, said selection step being triggered by the reception of at least one signalling message or a service message, coming from said at least one intermediate node, comprising said first and second parameters, and
- a step of sending an acknowledgment message to the first communication equipment comprising in at least one of its fields at least one parameter representative of the selected path.

8. Method according to Claim 7, **characterized in that**, with said at least one received message being a signalling message of said path comprising at least one parameter indicating that said data are intended to be transmitted bidirectionally between the first and the second communication equipment, the method further comprises the following steps executed by said intermediate node:
- intercepting said acknowledgment message,
- activating said at least one transmission function intended to be executed by said intermediate node,
- transmitting said acknowledgment message to the first communication equipment.

9. Method according to Claim 7, **characterized in that** the acknowledgment message further comprises a parameter for updating a routing file of the first communication equipment, said file being intended to be updated with said at least one parameter representative of the selected path.

10. Method according to Claim 7 or 8, **characterized in that** said at least one parameter representative of the selected path comprises a list of the transmission functions intended to be executed by said at least one intermediate node.

11. Method according to Claim 7 or 8, **characterized in that** said at least one parameter representative of the selected path comprises a list of transmission functions to be executed as well as an identifier of at least one intermediate node designed to execute each of the listed transmission functions.

12. Method according to Claim 7 or 8, **characterized in that** said at least one parameter representative of the selected path comprises at least one fingerprint identifying at least one transmission function intended to be executed and at least one intermediate node designed to execute said at least one transmission function.

13. Intermediate node of a path established between a first communication equipment and a second communication equipment, said intermediate node being designed to execute a function relating to data transmission, referred to as the transmission function, and comprising:
- means of intercepting a signalling message of said path sent by the first communication equipment to the second communication equipment,
- means of transmitting, to said second communication equipment, a message comprising at least one parameter representative of said transmission function, and at least a second parameter representative of the type of data intended to be transmitted between the first and the second communication equipment.

14. Communication equipment designed to select at least one path established between said communication equipment and another communication equipment, said path comprising at least one intermediate node designed to execute at least one function relating to data transmission, referred to as the transmission function, said communication equipment comprising:
- means of receiving at least one signalling message or a service message, coming from said at least one intermediate node, comprising at least one parameter representative of said transmission function and at least one parameter representative of the type of data intended to be transmitted between said communication equipment and the other communication equipment,
- means of selecting a path through which said data are intended to be transmitted on the basis of said at least one parameter representative of said transmission function and said at least one parameter representative of the type of data intended to be transmitted,
- means of sending an acknowledgment message to the other communication equipment comprising in at least one of its fields at least one parameter representative of the selected path.

15. Computer program product comprising program code instructions for implementing a method according to any one of Claims 1 to 5 when it is executed by a processor.

16. Computer program product comprising program code instructions for implementing a method according to any one of Claims 7 to 12 when it is executed by a processor.
